# EUROPEAN PATENT APPLICATION

(11) **EP 2 827 074 A1**
(43) Date of publication of application: **21.01.2015**
(21) Application number: 13761577.9
(22) Date of filing: 13.03.2013
(51) Int. Cl.: F24F 6/00, B01D 53/22, B01D 63/00, B01D 63/02, F24F 6/04, H01M 8/04, H01M 8/10

(54) **HUMIDIFIER**

(30) Priority: 13.03.2012 JP 2012056372
(71) Applicant: Nissan Motor Co., Ltd, Yokohama-shi, Kanagawa 221-0023 (JP)
(72) Inventor: USUDA, Masahiro, Atsugi-shi Kanagawa 243-0123 (JP); YAZAWA, Shigenori, Atsugi-shi Kanagawa 243-0123 (JP)
(74) Representative: Grünecker, Kinkeldey, Stockmair & Schwanhäusser
(86) International application number: PCT/JP2013/057005
(87) International publication number: WO 2013/137313

(57) **Abstract**

A water recovery device that allows a first gas to flow inside hollow fiber membranes and a second gas to flow outside the hollow fiber membranes, and that exchanges moisture between the first gas and the second gas, includes a hollow fiber membrane bundle in which plural pieces of the hollow fiber membranes are bundled, a storage case housing the hollow fiber membrane bundle in its inside, and a housing having an introduction hole and a discharge hole of the first gas and an introduction hole and a discharge hole of the second gas, and housing the storage case in its inside. The hollow fiber membrane bundle includes a first gas bypass passage that penetrates through an internal part of the hollow fiber membrane bundle in an axial direction and that has a channel cross-sectional area larger than a channel cross-sectional area inside the hollow fiber membrane.

## Description

### TECHNICAL FIELD

The present invention relates to a water recovery device.

### BACKGROUND ART

JP2010-71618A discloses the conventional water recovery device that allows a first gas to flow inside hollow fiber membranes and a second gas to flow outside the hollow fiber membranes, and that exchanges moisture between the first gas and the second gas.

### SUMMARY OF INVENTION

However, the aforementioned water recovery device has the problem of high pressure loss of the first gas that passes through the water recovery device.

The present invention is made in view of such a problem, and the object of the present invention is to reduce the pressure loss of the water recovery device.

### Means for Solving the Problems

According to an aspect of the present invention, a water recovery device that allows a first gas to flow inside hollow fiber membranes and a second gas to flow outside the hollow fiber membranes and that exchanges moisture between the first gas and the second gas includes a hollow fiber membrane bundle in which plural pieces of the hollow fiber membranes are bundled, a storage case housing the hollow fiber membrane bundle in its inside, and a housing having an introduction hole and a discharge hole of the first gas and an introduction hole and a discharge hole of the second gas, and housing the storage case in its inside. The hollow fiber membrane bundle includes a first gas bypass passage that penetrates through an internal part of the hollow fiber membrane bundle in an axial direction and that has a channel cross-sectional area larger than a channel cross-sectional area inside the hollow fiber membrane.

Embodiments of the present invention and advantages of the present invention will be explained in detail with reference to the attached drawings.

### BRIEF DESCRIPTION OF DRAWINGS

Fig. 1 is a schematic block diagram of a fuel cell system according to an embodiment of the present invention;
Fig. 2 is a perspective view of a water recovery device according to the embodiment of the present invention;
Fig. 3 is an exploded perspective view of the water recovery device according to the embodiment of the present invention;
Fig. 4 is a view explaining a hollow fiber membrane;
Fig. 5 is a cross-sectional view taken along the V - V line of the water recovery device in Fig. 2;
Fig. 6 is a view explaining the flow of a cathode off-gas inside a central body;
Fig. 7 is a view explaining the flow of the cathode off-gas inside the central body;
Fig. 8A is a cross-sectional view illustrating the state inside a hollow fiber membrane bundle according to this embodiment, in which two pieces of cathode gas bypass channels are provided;
Fig. 8B is a cross-sectional view illustrating the state inside the hollow fiber membrane bundle according to an aspect for reference, in which the cathode gas bypass channels are not provided; and
Fig. 9 is a cross-sectional view of a water recovery device according to another embodiment of the present invention.

### DESCRIPTION OF EMBODIMENTS

A fuel cell, in which an electrolyte membrane is sandwiched between an anode electrode (fuel electrode) and a cathode electrode (oxidant electrode), supplies an anode gas (fuel gas) containing hydrogen to the anode electrode and a cathode gas (oxidant gas) containing oxygen to the cathode electrode, so as to generate electric power. Electrode reactions that take place in both of the anode electrode and the cathode electrode are as follows.

Anode electrode: 2H₂ → 4H⁺ + 4e- (1)

Cathode electrode: 4H⁺ + 4e⁻ + O₂ → 2H₂O (2)

By the electrode reactions of (1) and (2), the fuel cell generates an electromotive force of about one volt.

When such a fuel cell is used as an automobile power source, hundreds of pieces of fuel cells are laminated and used as a fuel cell stack, as a large amount of electric power is required. Then, a fuel cell system for supplying the anode gas and the cathode gas to the fuel cell stack is formed, and electric power for driving a vehicle is extracted therefrom.

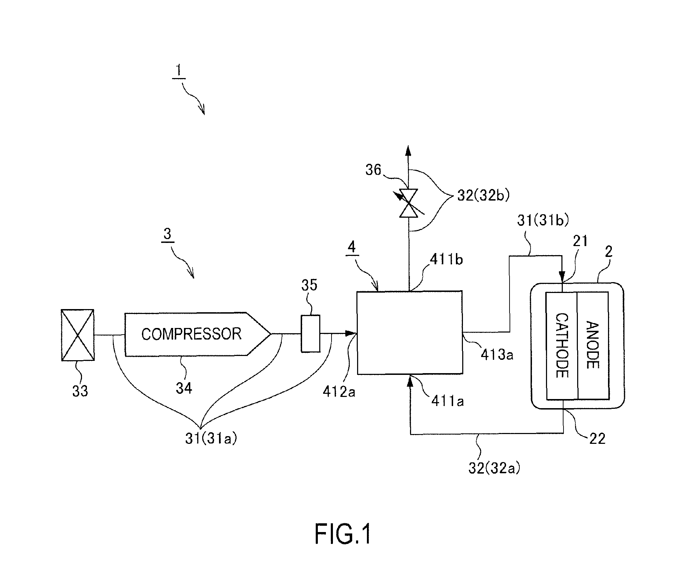

Fig. 1 is a schematic block diagram of a fuel cell system 1 according to an embodiment of the present invention.

The fuel cell system 1 is provided with a fuel cell stack 2 and a cathode gas supply and discharge device 3.

The fuel cell stack 2, formed by laminating a plurality of pieces of fuel cells, generates electric power by the supply of the anode gas and the cathode gas, so as to generate electric power that is required for driving the vehicle (electric power necessary for driving a motor, for example).

An anode gas supply and discharge device for supplying the anode gas to the fuel cell stack 2 and a cooling device for cooling the fuel cell stack 2 are not essential to the present invention, and therefore, illustrations thereof are omitted in order to facilitate understanding.

The cathode gas supply and discharge device 3 is a device that supplies the cathode gas to the fuel cell stack 2 and discharges a cathode off-gas that is discharged from the fuel cell stack 2 to the outside air. The cathode gas supply and discharge device 3 is provided with a cathode gas supply passage 31, a cathode gas discharge passage 32, a filter 33, a cathode compressor 34, an air flow sensor 35, a water recovery device (WRD) 4, and a cathode pressure regulating valve 36.

The cathode gas supply passage 31 is a passage through which the cathode gas to be supplied to the fuel cell stack 2 flows. When it is necessary to make a particular distinction in the following explanation, the passage whose one end is connected to the filter 33 and whose another end is connected to a cathode gas introduction hole 412a of the water recovery device 4 is referred to as a "cathode gas supply passage 31a" in the cathode gas supply passage 31. Further, the passage whose one end is connected to a cathode gas discharge hole 413a of the water recovery device 4 and whose another end is connected to a cathode gas inlet hole 21 of the fuel cell stack 2 is referred to as a "cathode gas supply passage 31b" in the cathode supply passage 31.

The cathode gas discharge passage 32 is a passage through which the cathode off-gas discharged from the fuel cell stack 2 flows. The cathode off-gas is a mixed gas (wet gas) of the cathode gas and water vapor that is generated by the electrode reactions. When it is necessary to make a particular distinction in the following explanation, the passage whose one end is connected to a cathode gas outlet hole 22 of the fuel cell stack 2 and whose another end is connected to a cathode off-gas introduction hole 411a of the water recovery device 4 is referred to as a "cathode gas discharge passage 32a" in the cathode gas discharge passage 32. Further, the passage whose one end is connected to a cathode off-gas discharge hole 411b of the water recovery device 4 and whose another end is an open end is referred to as a "cathode gas discharge passage 32b" in the cathode gas discharge passage 32.

The filter 33 removes foreign matters in the cathode gas that is taken into the cathode gas supply passage 31.

The cathode compressor 34 is provided on the cathode gas supply passage 31. The cathode compressor 34 takes the air (outside air) as the cathode gas into the cathode gas supply passage 31 via the filter 33, and supplies it to the fuel cell stack 2.

The air flow sensor 35 is provided on the cathode gas supply passage 31 at the position downstream of the cathode compressor 34. The air flow sensor 35 detects a flow rate of the cathode gas flowing through the cathode gas supply passage 31.

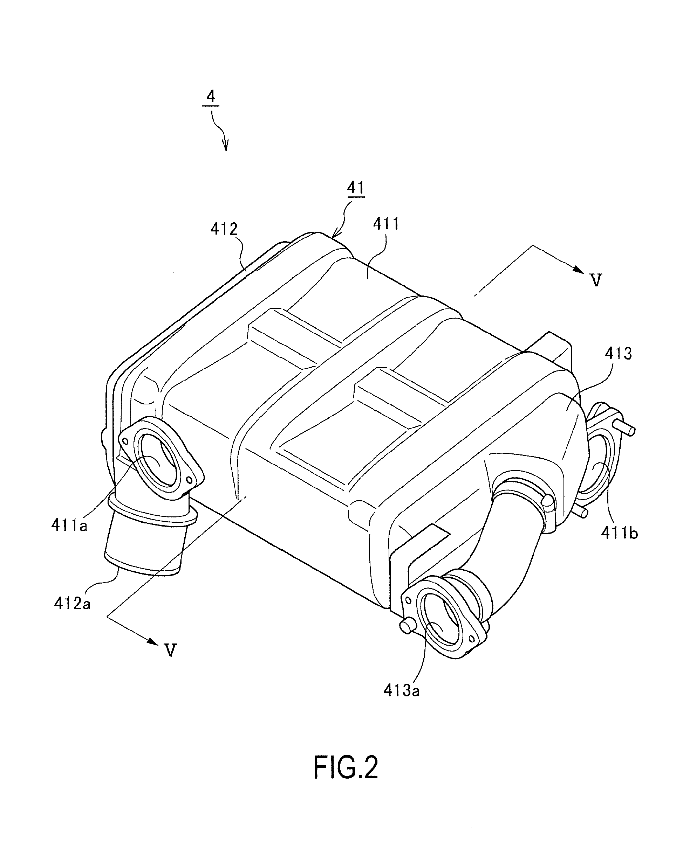

The water recovery device 4, connected to the cathode gas supply passage 31 and the cathode gas discharge passage 32, respectively, collects moisture in the cathode off-gas flowing through the cathode gas discharge passage 32, and uses the collected moisture to humidify the cathode gas flowing through the cathode gas supply passage 31. As the water recovery device 4 humidifies the cathode gas to be supplied to the fuel cell stack 2, drying of the electrolyte membranes of the fuel cells can be suppressed and proton transfer resistance can be reduced, as a result of which output performance (power generation efficiency) of the fuel cells can be improved. The detailed structure of the water recovery device 4 will be described later with reference to Fig. 2 to Fig. 5.

The cathode pressure regulating valve 36 is provided on the cathode gas discharge passage 32 at the position downstream of the water recovery device 4. The cathode pressure regulating valve 36 is a solenoid valve capable of adjusting its opening degree continuously or stepwise. By adjusting the opening degree of the cathode pressure regulating valve 36, a pressure of the cathode gas to be supplied to the fuel cell stack 2 is adjusted to be a desired pressure.

Next, the structure of the water recovery device 4 according to an embodiment of the present invention will be explained with reference to Fig. 2 to Fig. 5.

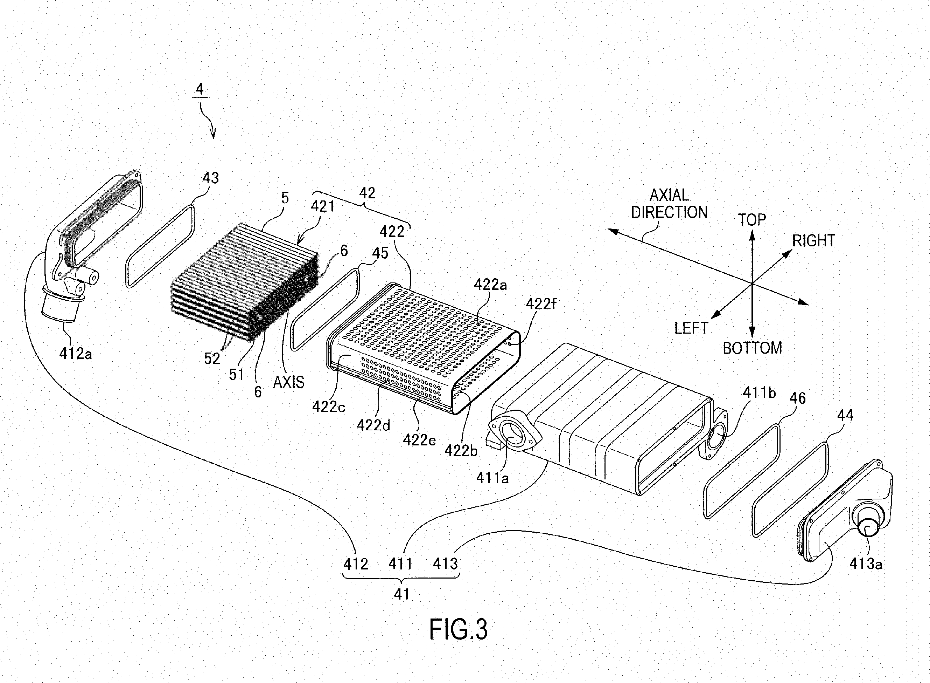

Fig. 2 is a perspective view of the water recovery device 4. Fig. 3 is an exploded perspective view of the water recovery device 4.

The water recovery device 4 is provided with a housing 41 and a hollow fiber membrane module 42.

The housing 41 is provided with a central body 411, a first closing body 412 and a second closing body 413. The housing 41 has the function of housing and protecting the hollow fiber membrane module 42 in its inside, the function of introducing the cathode gas and the cathode off-gas to be supplied to the hollow fiber membrane module 42 to the inside of the housing 41, and the function of discharging the cathode gas and the cathode off-gas supplied to the hollow fiber membrane module 42 to the outside of the housing 41.

The central body 411, as a flat metal case whose both ends are open, houses the hollow fiber membrane module 42 in its inside. In the following explanation, the direction that is orthogonal to opening surfaces at both ends of the central body is referred to as an "axial direction". Further, vertical and horizontal directions are defined by regarding the opening surface of the central body 411 on the second closing body side as the front, the upper side of the drawing as the top, the lower side of the drawing as the bottom, the front side of the drawing as the left, and the back side of the drawing as the right.

The cathode off-gas introduction hole 411a is formed in the left wall of the central body 411. The cathode off-gas introduction hole 411 a is connected to the first cathode gas discharge passage 32. The cathode off-gas introduction hole 411a introduces the cathode off-gas that is discharged from the fuel cell stack 2 and flowed through the cathode gas discharge passage 32a to the inside of the central body 411.

The cathode off-gas discharge hole 411b is formed in the right wall of the central body 411. The cathode off-gas discharge hole 411b is connected to the second cathode gas discharge passage 32. The cathode off-gas discharge hole 411b discharges the cathode off-gas, whose moisture is collected by the hollow fiber membrane module 42 after being introduced to the inside of the central body 411, to the cathode gas discharge passage 32b.

The first closing body 412 is a metal lid that is for closing the opening on one side of the central body 411, and that is provided with the cathode gas introduction hole 412a. The cathode gas introduction hole 412a is connected to the cathode gas supply passage 31a. The cathode gas introduction hole 412a introduces the cathode gas, discharged from the cathode compressor 34, to the inside of the first closing body 412. The cathode gas, introduced to the inside of the first closing body 412, is introduced to the inside of the central body 411 from its opening on one side.

The second closing body 413 is a metal lid that is for closing the opening on the other side of the central body 411, and that is provided with the cathode gas discharge hole 413a. The cathode gas discharge hole 413a is connected to the cathode gas supply passage 31b. The cathode gas discharge hole 413a discharges the cathode gas, humidified by the hollow fiber membrane module 42 and is discharged from the opening on the other side of the central body 411 to the inside of the second closing body 413, to the cathode gas supply passage 31b. The cathode gas, discharged to the cathode gas supply passage 31b, is supplied to the fuel cell stack 2 via the cathode gas supply passage 31b.

The central body 411 and the first closing body 412 are sealed by an O-ring 43. The central body 411 and the second closing body 413 are sealed by an O-ring 44.

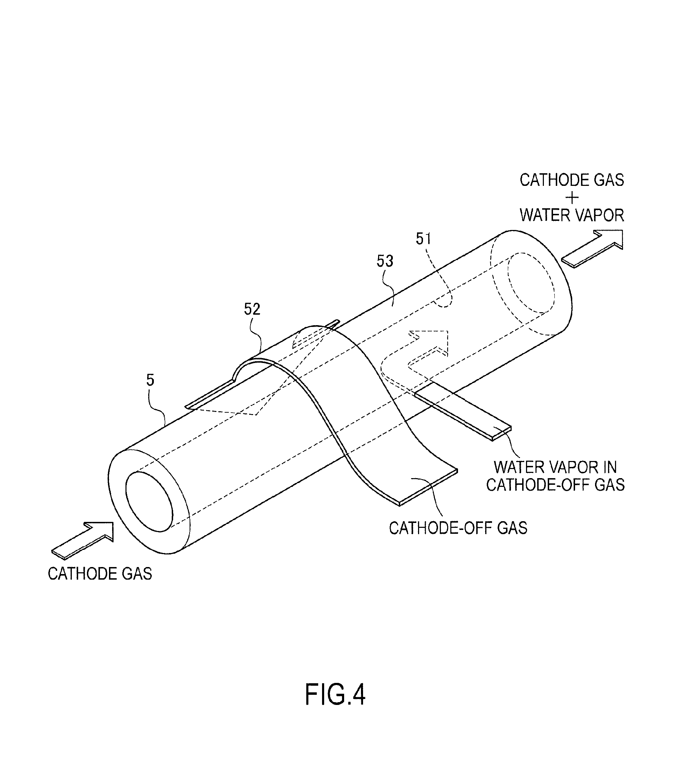

The hollow fiber membrane module 42 is provided with a hollow fiber membrane bundle 421 and a storage case 422. Before explaining respective components of the hollow fiber membrane module 42, a hollow fiber membrane 5 will be explained first with reference to Fig. 4.

Fig. 4 is a view explaining the hollow fiber membrane 5.

As illustrated in Fig. 4, the hollow fiber membrane 5 is a membrane having a hollow shape and having moisture permeability. The hollow fiber membrane 5 is open at its both end faces, and is provided with an internal channel 51 that allows the openings at the both end faces to communicate with each other. The hollow fiber membrane 5 exchanges moisture between an internal gas and an external gas according to a water vapor partial pressure difference between the internal gas flowing through the internal channel 51 and the external gas flowing while being in contact with an outer peripheral surface 52 of the hollow fiber membrane 5.

According to this embodiment, the internal gas is the cathode gas and the external gas is the cathode off-gas. By allowing the water vapor in the cathode off-gas to transmit to the internal channel 51 of the hollow fiber membrane 5, the cathode gas is humidified.

Hereinafter, the respective components of the hollow fiber membrane module 42 will be explained with reference to Fig. 3 again.

A plurality of pieces of hollow fiber membranes 5 are bundled, and the hollow fiber membranes are adhered to each other by filling, by a potting material, fine gaps between the respective hollow fiber membranes at both ends of the hollow fiber membrane bundle 421, so as to form the hollow fiber membrane bundle 421 integrally. The hollow fiber membranes, at portions other than the both ends of the hollow fiber membrane bundle 421, are not adhered to each other by the potting material, and the fine gaps remain among the respective hollow fiber membranes. The fine gaps that are present among the respective hollow fiber membranes form channels (hereinafter referred to as "external channels") 52 through which the above-described external gas flows. The hollow fiber membrane bundle 421 allows the water vapor in the cathode off-gas flowing through the external channels 52 to transmit to the internal channels 51 of the respective hollow fiber membranes 5, so as to humidify the cathode gas flowing through the internal channels 51.

Further, the hollow fiber membrane bundle 421 is provided therein with two pieces of cathode gas bypass channels 6 that penetrate the hollow fiber membrane bundle 421 in the axial direction.

The cathode gas bypass channels 6 are respectively provided at the positions that are horizontally offset from the axis of the hollow fiber membrane bundle 421 by a predetermined amount, so that the cathode gas bypass channels 6 are symmetric with respect to the axis of the hollow fiber membrane bundle 421. The cathode gas bypass channels 6 are formed by the potting material that is similar to the one used for adhering the hollow fiber membranes, and discharge the cathode gas, introduced from the first closing body 412 to the central body 411, to the second closing body 413 without the humidification. In other words, the cathode gas bypass channels 6 have the functions of bypassing the hollow fiber membrane bundle 421 and discharging the cathode gas, introduced to the first closing body 412, to the second closing body 413 without any change. The cross-sectional area (area of the cross section orthogonal to the axial direction) of each cathode gas bypass channel 6 is formed to be larger than the cross-sectional area of each hollow fiber membrane 5.

The storage case 422, as a flat resin case whose both ends are open, houses the hollow fiber membrane bundle 421 in its inside in such a manner that the longitudinal direction of the hollow fiber membrane bundle 421 is in parallel to the axial direction.

The central body 411 and one end of the storage case 422 are sealed by an O-ring 45. The central body 411 and the other end of the storage case 422 are sealed by an O-ring 46.

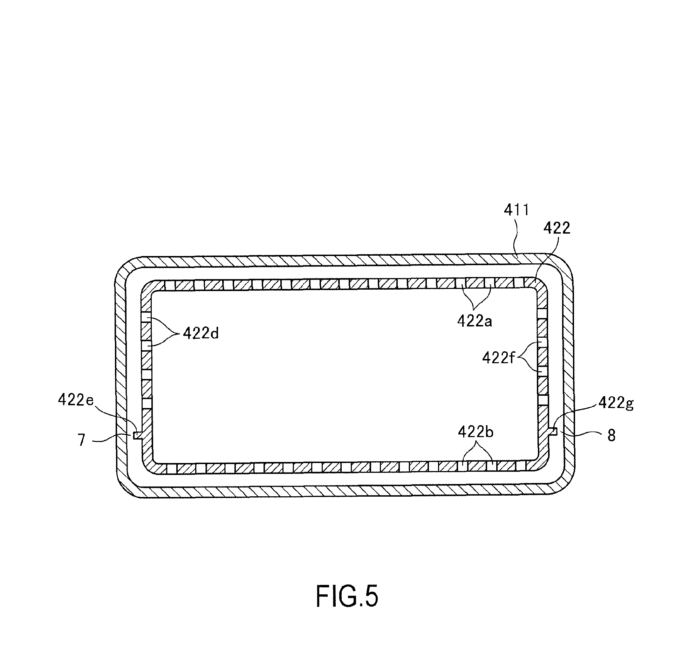

In addition, the storage case 422 has the functions of allowing the cathode off-gas to flow into the external channels 52 of the hollow fiber membrane bundle 421 from a part of the side walls (the upper wall, the right wall and the left wall) of the storage case 422, and allowing the cathode off-gas, flowed into the external channels 52, to flow out from a part of the remaining side wall (the lower wall) of the storage case 422. Hereinafter, the structure for performing these functions will be explained with reference to Fig. 5 as well as Fig. 3.

Fig. 5 is a cross-sectional view taken along the V - V line of the water recovery device 4 in Fig. 2. In Fig. 5, the illustration of the hollow fiber membrane bundle 421 is omitted.

As illustrated in Fig. 3 and Fig. 5, upper gas inflow holes 422a are formed in the upper wall of the storage case 422.

The upper gas inflow holes 422a are holes penetrating the upper wall, and a plurality of the upper gas inflow holes 422a are formed over the almost entire surface of the upper wall. The cathode off-gas, introduced from the cathode off-gas introduction hole 411a formed in the left wall of the central body 411 to the inside of the central body 411, flows mainly from the upper gas inflow holes 422a into the external channels 52 of the hollow fiber membrane bundle 421.

Gas discharge holes 422b are formed in the lower wall of the storage case 422.

The gas discharge holes 422b are holes penetrating the lower wall, and a plurality of the gas discharge holes 422b are formed over the almost entire surface of the lower wall. The cathode off-gas, flowed into the external channels 52 of the hollow fiber membrane bundle 421, is discharged from the gas discharge holes 422b to the inside of the central body 411. Then, it is discharged from the cathode off-gas discharge hole 422b, formed in the right wall of the central body 411, to the cathode gas discharge passage 32.

On the left wall of the storage case 422, a diffusion wall 422c, left gas inflow holes 422d, and a left bypass rib 422e are formed.

The diffusion wall 422c is formed at the position that opposes to the cathode off-gas introduction hole 411a formed in the central body 411, when the hollow fiber membrane module 42 is housed in the central body 411. The cathode off-gas, introduced from the cathode off-gas introduction hole 411a to the inside of the central body 411, collides with the diffusion wall 422c and is diffused.

The left gas inflow holes 422d are holes penetrating the left wall, and a plurality of the left gas inflow holes 422d are formed over the almost entire surface of the left wall, except for the part where the diffusion wall 422c is formed. The cathode off-gas, introduced to the inside of the central body 411, flows into the external channels 52 of the hollow fiber membrane bundle 421 from the left gas inflow holes 422d, as well as the upper gas inflow holes 422a.

The left bypass rib 422e is a protruded line that protrudes vertically from the lower part of the left wall and is formed along the axial direction. The left bypass rib 422e is formed to make a predetermined space (hereinafter referred to as a "left bypass space") 7 from the inner peripheral surface of the central body 411.

On the right wall of the storage case 422, right gas inflow holes 422f and a right bypass rib 422g are formed.

The right gas inflow holes 422f are holes penetrating the right wall, and a plurality of the right gas inflow holes 422f are formed over the almost entire surface of the right wall. The cathode off-gas, introduced to the inside of the central body 411, flows into the external channels 52 of the hollow fiber membrane bundle 421 from the right gas inflow holes 422f, as well as the upper gas inflow holes 422a.

The right bypass rib 422g is a protruded line that protrudes vertically from the lower side of the outer peripheral surface of the right wall and is formed along the axial direction. The right bypass rib 422g is formed to make a predetermined space (hereinafter referred to as a "right bypass space") 8 from the inner peripheral surface of the central body 411.

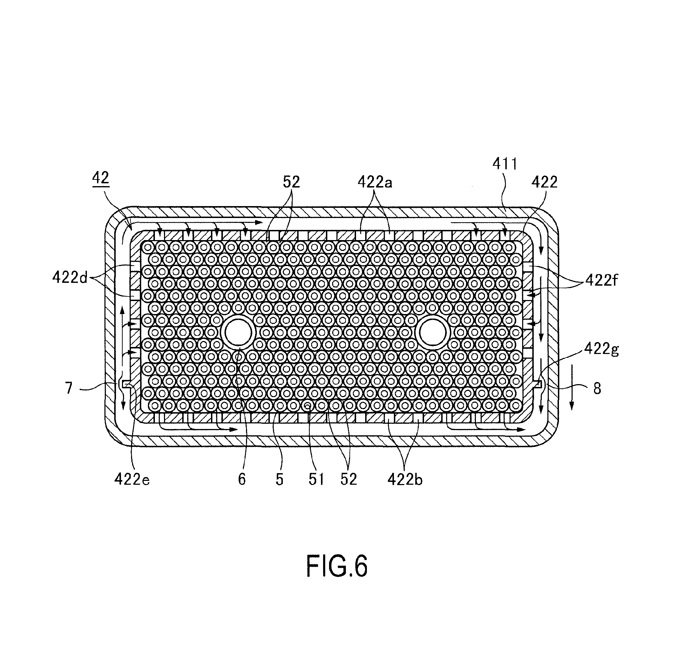

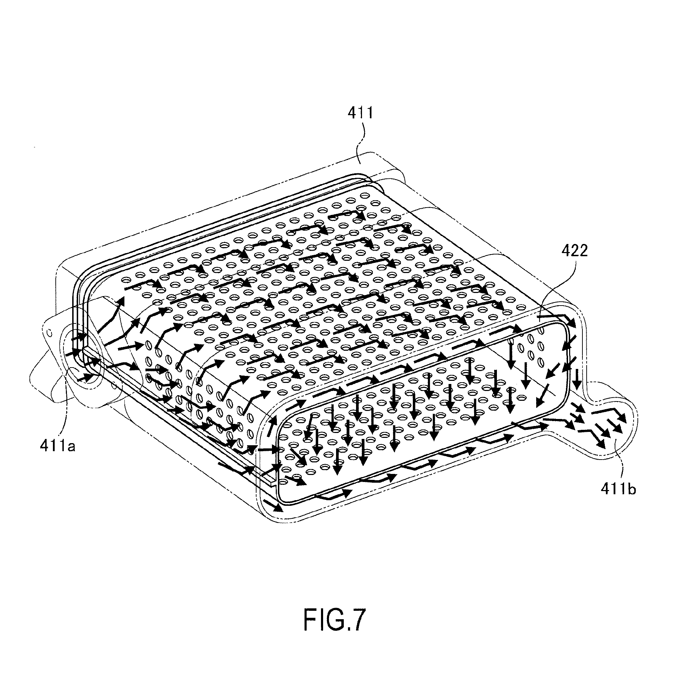

Next, the flow of the cathode off-gas in the central body will be explained with reference to Fig. 6 and Fig. 7.

As illustrated in Fig. 6 and Fig. 7, a predetermined space is formed between the central body 411 and the storage case 422, when the hollow fiber membrane module 42 is housed in the central body 411.

The cathode off-gas, introduced from the cathode off-gas introduction hole 411a of the central body 411 to the inside of the central body 411 (the space between the central body 411 and the storage case 422), collides with the diffusion wall 422c of the left wall and is diffused. Then, a part of the cathode off-gas flows through the space between the central body 411 and the storage case 422, and flows into the external channels 52 of the hollow fiber membrane bundle 421 from the respective gas inflow holes 422a, 422d and 422f that are formed in the side walls of the storage case 422.

Meanwhile, a part of the remainder flows through the left bypass space 7 and the right bypass space 8, and flows into the space between the central body 411 and the lower wall of the storage case 422, to be discharged from the cathode gas discharge hole 422b without flowing into the external channels 52 of the hollow fiber membrane bundle 421.

The flow rate of the cathode off-gas, flowing through the left bypass space 7 and the right bypass space 8, can be controlled by adjusting the heights of the left bypass rib 422e and the right bypass rib 422g. In other words, the flow rate of the cathode off-gas flowing from the respective gas inflow holes 422a, 422d and 422f of the storage case 422 into the external channels 52 of the hollow fiber membrane bundle 421, the flowing direction of the cathode off-gas after flowing into the external channels 52, the flow velocity and the like can be controlled by adjusting the heights of the left bypass rib 422e and the right bypass rib 422g.

According to this embodiment, as illustrated in Fig. 7, the cathode off-gas, flowing from the respective gas inflow holes 422a, 422d and 422f of the storage case 422 into the external channels 52 of the hollow fiber membrane bundle 421, is made to flow uniformly from the entire surface of the upper surface wall, and to flow vertically from the upper wall toward the lower wall at the equal flow velocity, by properly setting the heights of the left bypass rib 422e and the right bypass rib 422g.

The cathode off-gas, flowing from the upper wall toward the lower wall through the external channels 52 of the hollow fiber membrane bundle 421, is discharged from the gas discharge holes 422b in the lower wall into the space between the central body 411 and the lower wall of the storage case 422, and is discharged from the cathode gas discharge hole 422b together with the cathode off-gas flowing through the left bypass space 7 and the right bypass space 8.

Next, the flow of the cathode gas in the housing 41 will be explained.

The cathode gas, introduced from the cathode gas introduction hole 412a of the first closing body 412 to the inside of the first closing body 412, is introduced from one of the openings of the central body 411 to the inside of the central body 411. As the space between the outer peripheral surface of one end of the storage case 422 and the inner peripheral surface of the central body 411 is sealed by the O-ring or the like, a part of the cathode gas, introduced to the inside of the central body 411, flows into the internal channels 51 of the hollow fiber membranes 5 of the hollow fiber membrane bundle 421 that is housed in the storage case 422, and a part of the remainder flows into the cathode gas bypass channels 6.

The cathode gas, flowing into the internal channels 51 of the hollow fiber membranes 5, is humidified by the water vapor transmitted from the external channels 52, and is introduced to the inside of the second closing body 413 from the other opening of the central body 411. Meanwhile, the cathode gas, flowing into the cathode gas bypass channels 6, is introduced to the inside of the second closing body 413 from the other opening of the central body 411 without being humidified and without any change. The cathode gas, introduced to the inside of the second closing body 413, is discharged from the cathode gas discharge hole 422b to the second cathode gas supply passage 31, and is supplied to the fuel cell stack 2.

According to the embodiment as described thus far, the cathode gas bypass channels 6 that penetrate the hollow fiber membrane bundle 421 in the axial direction are formed inside the hollow fiber membrane bundle 421. Moreover, the cross-sectional area of each cathode gas bypass channel 6 is formed to be larger than the cross-sectional area of each internal channel 51 of the hollow fiber membrane 5.

Thereby, a part of the cathode gas, introduced to the inside of the central body 411, flows through the cathode gas bypass channels 6 each having the cross-sectional area larger than that of the internal channel 51 of the hollow fiber membrane 5, which makes it possible to reduce pressure loss of the cathode gas flowing through the hollow fiber membrane bundle 421 and thus through the water recovery device 4.

Incidentally, the flow rate and the pressure of the cathode gas that are required by the fuel cell stack 2 basically increase as the load of the fuel cell stack 2 increases. However, when the pressure loss of the cathode gas flowing through the water recovery device 4 increases, it is necessary to set the rotating speed of the cathode compressor 34 to be higher by the amount of the pressure loss.

By reducing the pressure loss of the cathode gas flowing through the water recovery device 4, the rotating speed of the cathode compressor 34 can be set lower, as a result of which the electric power consumption of the cathode compressor 34 can be suppressed and the fuel efficiency can be improved.

Further, according to this embodiment, the two pieces of the cathode gas bypass channels 6 are respectively provided at the positions that are horizontally offset from the axis of the hollow fiber membrane bundle 421 by the predetermined amount, so that the cathode gas bypass channels 6 are symmetric with respect to the axis of the hollow fiber membrane bundle 421.

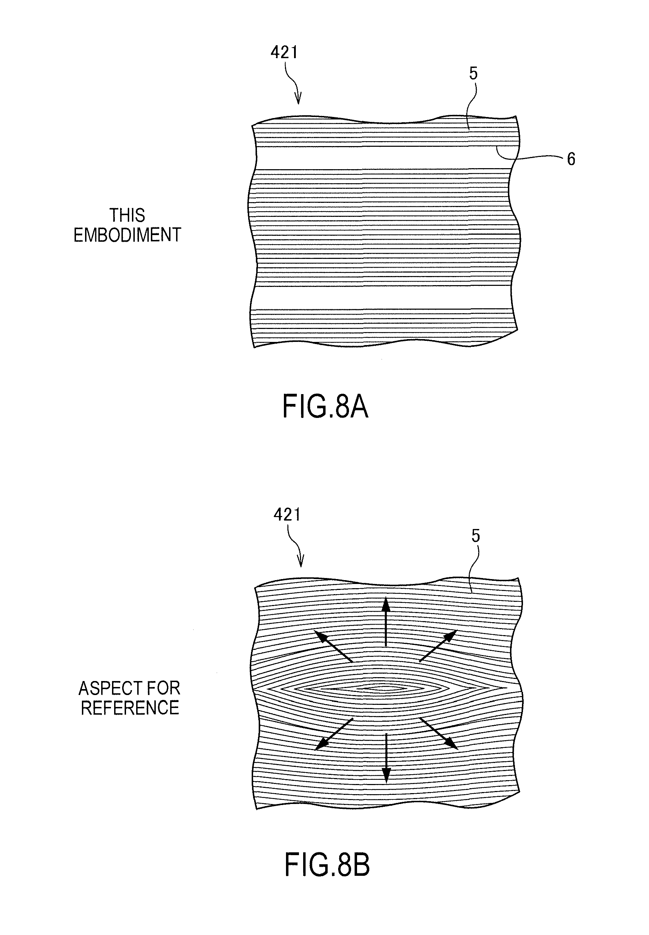

Figs. 8 are views explaining its effect. Fig. 8A is a cross-sectional view illustrating the state inside the hollow fiber membrane bundle 421 according to this embodiment, in which the two pieces of the cathode gas bypass channels 6 are provided, and Fig. 8B is a cross-sectional view illustrating the state inside the hollow fiber membrane bundle 421 according to an aspect for reference, in which the cathode gas bypass channels 6 are not provided.

When the cathode gas bypass channels 6 are not provided and when the cathode off-gas is allowed to flow to intersect the cathode gas, as illustrated in Fig. 8B, the cathode off-gas tends to flow by inclining toward the center of the hollow fiber membrane bundle 421, and the respective hollow fiber membranes 5 at the center of the hollow fiber membrane bundle 421 tend to get twisted gradually toward the left and right outer sides. In other words, the portion where the cathode off-gas is easy to flow through and the portion where the cathode off-gas is difficult to flow through are caused inside the hollow fiber membrane bundle 421. As a result of this, there is a danger that the moisture exchange efficiency of the hollow fiber membrane bundle 421 is deteriorated.

Meanwhile, when the two pieces of the cathode gas bypass channels 6 are provided to be symmetric with respect to the axis of the hollow fiber membrane bundle 421, as illustrated in Fig. 8A, the twist of the respective hollow fiber membranes 5 at the center of the hollow fiber membrane bundle 421 can be suppressed by the cathode gas bypass channels 6. This makes it possible to suppress the deterioration of the moisture exchange efficiency of the hollow fiber membrane bundle 421.

In addition, the moisture exchange efficiency inside the hollow fiber membrane bundle 421 tends to be deteriorated at the center than in the vicinity of the outer periphery with which the cathode off-gas comes into contact with ease. Thus, as the cathode gas bypass channels 6 are provided at the positions that are relatively closer to the axis of the hollow fiber membrane bundle 421, the deterioration of the moisture exchange efficiency of the hollow fiber membrane bundle 421 as a whole can be suppressed.

Furthermore, according to this embodiment, the cathode gas bypass channels 6 are formed by the potting material that is similar to the potting material used for adhering the hollow fiber membranes.

This makes it possible to make coefficients of linear expansion uniform, and to suppress the occurrence of adhesion failures.

The embodiment of the present invention as explained thus far is only a part of application examples of the present invention, and is not intended to limit the technical scope of the present invention to the concrete structure of the above-described embodiment.

According to the above-described embodiment, for example, the two pieces of the cathode gas bypass channels 6 are respectively provided at the positions that are horizontally offset from the axis of the hollow fiber membrane bundle 421 by the predetermined amount, so that the cathode gas bypass channels 6 are symmetric with respect to the axis of the hollow fiber membrane bundle 421. However, the positions where the cathode gas bypass channels 6 are provided are not limited to the above.

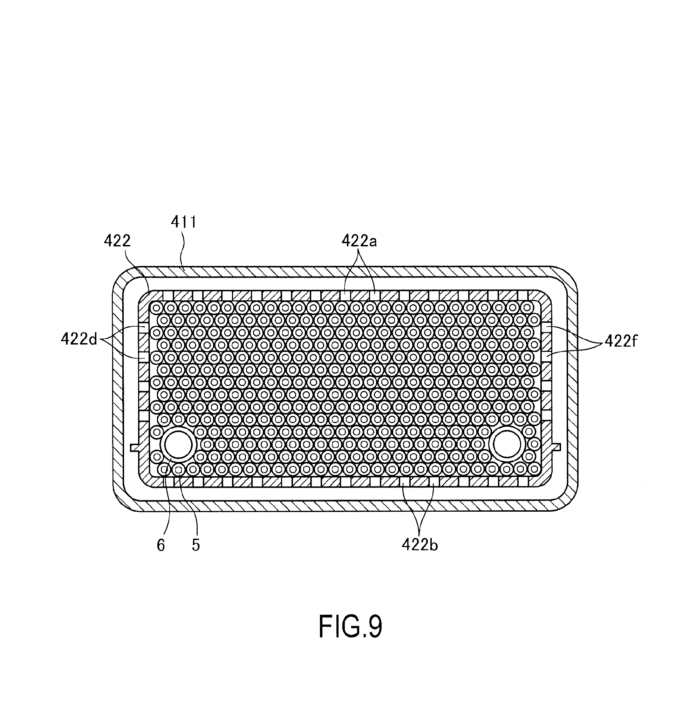

For example, as illustrated in Fig. 9, the cathode gas bypass channels 6 may be formed near the corners on the lower surface wall side of the storage case 422, where the gas inflow holes 422a, 422d and 422f are not formed. The cathode off-gas is particularly difficult to flow and the moisture exchange efficiency of the hollow fiber membrane bundle 421 is the lowest at the corners on the lower surface wall side of the storage case 422. When the cathode gas bypass channels 6 are formed at these positions, it is possible to suppress the deterioration of the moisture exchange efficiency of the hollow fiber membrane bundle 421 as a whole, and to suppress the reduction of the pressure loss.

Furthermore, according to the above-described embodiment, the cathode off-gas is allowed to flow to intersect the flow direction of the cathode gas, but the cathode off-gas may be allowed to flow to face the flow direction of the cathode gas.

Furthermore, according to the above-described embodiment, the cathode gas is allowed to flow through the internal channels 51 of the hollow fiber membrane bundle 42 and the cathode off-gas is allowed to flow through the external channels 52, but the cathode off-gas may be allowed to flow through the internal channels 51 and the cathode off-gas may be allowed to flow through the external channels 52.

The present application claims priority to Japanese Patent Application No. 2012-56372, filed in the Japan Patent Office on March 13, 2012. The contents of this application are incorporated herein by reference in their entirety.

## Claims

1. A water recovery device that allows a first gas to flow inside hollow fiber membranes and a second gas to flow outside the hollow fiber membranes, and that exchanges moisture between the first gas and the second gas, the water recovery device comprising:
a hollow fiber membrane bundle in which plural pieces of the hollow fiber membranes are bundled;
a storage case housing the hollow fiber membrane bundle in its inside; and
a housing having an introduction hole and a discharge hole of the first gas and an introduction hole and a discharge hole of the second gas, and housing the storage case in its inside,
wherein the hollow fiber membrane bundle comprises a first gas bypass passage that penetrates through an internal part of the hollow fiber membrane bundle in an axial direction and that has a channel cross-sectional area larger than a channel cross-sectional area inside the hollow fiber membrane.

2. The water recovery device according to claim 1,
wherein the storage case comprises gas inflow holes that allow the second gas to flow into the hollow fiber membrane bundle from a part of side surfaces, so that the second gas flowing outside the hollow fiber membranes flows to intersect the first gas flowing inside the hollow fiber membranes inside the hollow fiber membrane bundle, and gas outflow holes that allow the second gas flowing into the hollow fiber membrane bundle to flow out from a part of remaining side surfaces, and
wherein two pieces of the first gas bypass passages are provided so as to sandwich an axis of the hollow fiber membrane bundle.

3. The water recovery device according to claim 2,
wherein the storage case has substantially rectangular opening surfaces at both ends, and comprises the gas inflow holes in an upper side surface including a longer side and in right and left side surfaces including shorter sides, when vertical and horizontal directions are defined by regarding the opening surface as a front, and the gas discharge holes in a lower side surface including a longer side.

4. The water recovery device according to claim 1,
wherein the first gas bypass passage is provided at a position where moisture exchange efficiency between the first gas and the second gas is relatively low inside the hollow fiber membrane bundle.

5. The water recovery device according to any one of claim 1 to claim 4, wherein the hollow fiber membrane bundle is integrally formed by adhering both ends of the hollow fiber membranes by a potting material, and
wherein the first gas bypass passage is a passage formed by a material identical to the potting material.
